# EUROPEAN PATENT APPLICATION

(11) **EP 1 775 947 A1**
(43) Date of publication of application: **18.04.2007**
(21) Application number: 05767128.1
(22) Date of filing: 28.07.2005
(51) Int. Cl.: H04N 5/92, G11B 20/10

(54) **RECORDING DEVICE AND RECORDING METHOD**

(30) Priority: 02.08.2004 JP 2004225537
(71) Applicant: MATSUSHITA ELECTRIC INDUSTRIAL CO., LTD., Osaka 571-8501 (JP)
(72) Inventor: SAEKI, Shinichi Matsushita Elc.Ind.Co.Ltd, 3-7 Shiromi 1Chome Osaka 540-6319 (JP)
(74) Representative: Grünecker, Kinkeldey, Stockmair & Schwanhäusser Anwaltssozietät
(86) International application number: PCT/JP2005/013853
(87) International publication number: WO 2006/013781

(57) **Abstract**

To provide a recorder that can change its video recording modes automatically according to the type of a signal received without having the user pay his or her attention to the signal type even in a situation where HD and SD video signals having mutually different transfer rates are broadcast on the same channel. The recorder can write a data stream on multiple types of storage media and includes: a receiving section for receiving a digital broadcasting wave and outputting a data stream; a transfer rate detecting section, which receives the data stream and detects its transfer rate; a recording processing section for performing either a first type of recording processing including a compression coding process or a second type of recording processing including no compression coding process on the data stream received; and a selecting section for selecting either the first or second type of recording processing according to the transfer rate. The recorder writes the data stream that has been processed by the recording processing section on one of the storage media.

## Description

### TECHNICAL FIELD

The present invention relates to a technique of recording a data stream, generated from a digital TV program signal, on a storage medium.

### BACKGROUND ART

Numerous devices for recording a video signal on a storage medium have been developed so far. For example, Patent Document No. 1 discloses a device with a plurality of recording processing routes. This device receives a digital stream representing a video signal as an input and can write the digital stream on a storage medium in any of multiple video recording modes. The recording modes include Video Recording Mode #1 in which the digital stream is recorded as it is, Video Recording Mode #2 in which the digital stream is recorded after having been decoded, and Video Recording Mode #3 in which the digital stream is decoded, subjected to an intra-mode compression coding process and then recorded. The user can select any of these video recording modes.

Also, Patent Document No. 2 discloses a video recorder that can receive both a digital broadcast signal and an analog broadcast signal. If the transfer rate of the digital broadcast signal is higher than a write rate set by the user, the video recorder records the program using the analog broadcast signal instead of the digital broadcast signal. In this case, however, the digital and analog broadcast programs are supposed to have the same contents.

Furthermore, Patent Document No. 3 discloses a VCR as a video recorder that selects a video recording mode automatically according to the type of the storage medium, the space left, and the scheduled recording time. This device calculates the remaining space of the given videotape by recognizing the type of the tape by its thickness, for example, and collecting reel rotation information, automatically selects the best video recording mode such that the recording can be done within the scheduled recording time at as high a quality as possible, and records the designated program. Furthermore, Patent Document No. 4 discloses a broadcast receiver for converting a digital video signal representing a digital broadcast program, for example, into an analog format. This broadcast receiver down-converts a video signal compliant with a digital broadcast standard such as a high definition (HD) video signal into the current analog standard definition (SD) video signal. By using this device, an analog video recorder can record a content as a digital broadcast.

Furthermore, Patent Documents Nos. 5 and 6 disclose video recorders that select a video recording mode automatically. These devices set an encoding parameter for compression coding in accordance with content-related information that is sent along with video data.

Meanwhile, in Japan and other countries, a digital TV signal representing a BS digital broadcast, for example, is transmitted as an MPEG-2 transport stream, which is obtained by multiplexing compression-coded video and audio encoded streams together. In the same way, in recording video on a storage medium such as a DVD, an encoded stream, obtained by multiplexing such compression-coded video and audio encoded streams together, is also used generally. More particularly, an encoded stream to be written on a DVD is an MPEG-2 program stream obtained by multiplexing together video and audio encoded streams, of which the resolution is as high as an SD video signal.

In transmitting a digital broadcast and recording it on a DVD, an MPEG encoding technique is usually used. When image data is encoded by the MPEG encoding technique, intra-frame coding processing for encoding the image data by utilizing the intra-frame correlation of a pixel value and inter-frame coding processing for encoding the image data by utilizing the inter-frame correlation of a pixel value are switched adaptively. According to the MPEG encoding technique, the image data is encoded using encoded data, corresponding to a number of consecutive frames, as a unit.
**Patent Document No. 1:** Japanese Patent Application Laid-Open Publication No. 7-23339
**Patent Document No. 2:** Japanese Patent Application Laid-Open Publication No. 2001-128123
**Patent Document No. 3:** Japanese Patent Application Laid-Open Publication No. 8-235670
**Patent Document No. 4:** Japanese Patent Application Laid-Open Publication No. 11-205729
**Patent Document No. 5:** Japanese Patent Application Laid-Open Publication No. 2000-287173
**Patent Document No. 6:** Japanese Patent Application Laid-Open Publication No. 2001-36861

### DISCLOSURE OF INVENTION

### PROBLEMS TO BE SOLVED BY THE INVENTION

If an HD video signal and an SD video signal are broadcast on the same channel as in a digital broadcast, the user has to select appropriate recording modes for portions represented by the HD video signal and the other portions represented by the SD video signal, which does not come in handy for him or her. For example, if the user wants to record an HD broadcast after having recompressed it to decrease the write rate and also wants to record the SD video signal as the originally broadcast stream as it is, then he or she has to set mutually different video recording conditions for the HD video signal and the SD video signal, thus imposing too much operating load on him or her. On top of that, as video recorders come to have more and more varied functions lately, the user has to struggle to specify his or her desired recording mode and go through overly complicated setting operations.

An object of the present invention is to change video recording modes automatically according to the type of a received signal without having the user pay his or her attention to the signal type even in a situation where HD and SD video signals having mutually different transfer rates are broadcast on the same channel.

### MEANS FOR SOLVING THE PROBLEMS

A recorder according to the present invention has an ability to write a data stream on multiple types of storage media. The recorder includes: a receiving section for receiving a digital broadcasting wave and outputting a data stream; a transfer rate detecting section, which receives the data stream and detects its transfer rate; a recording processing section for performing either a first type of recording processing including a compression coding process or a second type of recording processing including no compression coding process on the data stream received; and a selecting section for selecting either the first or second type of recording processing according to the transfer rate. The recorder writes the data stream that has been processed by the recording processing section on one of the storage media.

The recording processing section may perform encoding recording processing, including encoding the data stream, as the first type of recording processing and stream recording processing, including neither decoding nor encoding the data stream, as the second type of recording processing, respectively.

The recorder may further include a recognizing section for recognizing the type of the storage medium loaded. The selecting section may select either the first or second type of recording processing according to the type of the storage medium recognized as well.

The receiving section may output a plurality of data streams one after another. The transfer rates of the data streams may change when the data streams are switched. And the selecting section may switch one of the first and second types of recording processing into the other according to the transfer rate of the data stream newly switched.

The recorder may further include an input buffer for temporarily storing the data stream yet to be processed by the recording processing section. The input buffer may store the data stream while the selecting section is switching the types of recording processing.

The recorder may further include an output buffer for temporarily storing the data stream that has been processed by the recording processing section. The output buffer may store the data stream supplied from the recording processing section after the selecting section has switched the types of recording processing.

The recorder may further include a signal generating section for generating an identification signal showing whether the recording processing selected is the first type or the second type.

The recorder may write identification information represented by the identification signal on the storage medium.

The recorder may further include: a setting section that receives an instruction on a recording mode to set; and a controller, which sets a write rate according to the recording mode and controls the selecting operation of the selecting section based on a result of the comparison between the write rate that has been set and the transfer rate. If the transfer rate is higher than the write rate that has been set, the controller may instruct the selecting section to select the first type of recording processing. But if the transfer rate is equal to or lower than the write rate that has been set, the controller may instruct the selecting section to select the second type of recording processing.

The recorder may further include a recognizing section for outputting recognition information showing whether the storage medium loaded is a first type of storage medium or a second type of storage medium. The maximum write rate of the first type of storage medium is lower than that of the second type of recording medium. If a recording mode with the highest quality is selected and if the recognition information shows that the storage medium loaded is the first type of storage medium, the controller may set a first write rate as the write rate. On the other hand, if the recording mode with the highest quality is selected and if the recognition information shows that the storage medium loaded is the second type of storage medium, the controller may set a second write rate, which is higher than the first write rate, as the write rate.

A recording method according to the present invention includes the steps of: receiving a digital broadcasting wave and outputting a data stream; receiving the data stream and detecting its transfer rate; selecting either a first type of recording processing including a compression coding process or a second type of recording processing including no compression coding process according to the transfer rate; receiving the data stream and performing the selected type of recording processing on the stream; and writing the data stream that has been processed through the recording processing on a storage medium.

The recording method may further include the step of recognizing the type of the storage medium loaded. The step of selecting may include selecting either the first or second type of recording processing according to the type of the storage medium recognized as well.

The step of receiving may include receiving the digital broadcasting wave and outputting a plurality of data streams one after another. The transfer rates of the data streams being output may change when the data streams are switched. The step of selecting may include switching one of the first and second types of recording processing into the other according to the transfer rate of the data stream newlyswitched.

### EFFECTS OF THE INVENTION

Even when two signals (e.g., HD video and SD video signals) are broadcast at mutually different transfer rates on the same channel, a recorder according to the present invention automatically selects the best recording mode to process either HD video or SD video according to the transfer rate. In this case, the recorder performs the video recording operation by switching a type of processing with a compression coding process and another type of processing with no compression coding process. Since one of the two types of processing, which is the more appropriate to process a given program, is automatically selected to record the program, the user does not have to set video recording conditions for respective programs anymore. As a result, the user never gets irritated with overly complicated operations.

The selected processing is performed separately by an encoding recording processor that encodes a data stream and by a recording processor that neither decodes nor encodes the data stream. Thus, options are a mode to write an input signal directly and a mode to re-encode the input signal. The recorder automatically selects the more appropriate type of recording processing and records the program without having the user pay attention to the transfer rate of the input signal.

In addition, according to the present invention, a recognizing section for recognizing the type of the given storage medium, on which the recording operation should be performed, is further provided. Thus, the program can be recorded with the more appropriate type of recording processing selected automatically without having the user pay attention to the maximum write rate for the given medium when the write rate needs to be selected.

The recorder further includes an input buffer for the data to be input to be recording processing section. In switching the types of recording processing, the input buffer temporarily stores the signal that is going to enter the recording processing section. Consequently, no part of any incoming stream gets lost when the types of recording processing are switched into the more appropriate one.

Besides, the recorder further includes an output buffer for storing the output data of the recording processing section. In switching the types of recording processing, the output buffer temporarily stores the output data of the recording processing section. Consequently, no part of the output stream of the recording processing section gets lost when the types of recording processing are switched into the more appropriate one. Furthermore, according to the present invention, information to recognize at least one type of recording processing that has been selected from multiple types of recording processing is indicated. As a result, the user can recognize what type of recording processing has been selected automatically by the recorder.

### BRIEF DESCRIPTION OF DRAWINGS

FIG. **1** shows an arrangement of functional blocks for a recorder **100.**
FIG. **2** shows an arrangement of functional blocks for a re-encoding recording processing section **106.**
FIG. **3(a)** shows correlation between the transfer rate of a digital broadcast stream and write rates associated with respective recording modes when a BD is loaded, while FIG. **3(b)** shows correlation between the transfer rate of a digital broadcast stream and write rates associated with respective recording modes when a DVD is loaded.
FIG. **4** is a flowchart showing the procedure of processing to be done by the recorder **100.**
FIG. **5** is a flowchart showing the procedure of a threshold value determining process.
FIG. **6** is a flowchart showing the procedure of a mode changing process.
FIGS. **7(a)** through **7(e)** show a video recording mode indicator tube **70** as an example of the video recording mode indicating section **115.**
FIGS. **8(a)** through **8(c)** show a video recording mode indicator tube **80** as another example of the video recording mode indicating section **115.**
FIGS. **9(a)** through **9(d)** show a video recording mode indicator tube **90** as still another example of the video recording mode indicating section **115.**

### DESCRIPTION OF REFERENCE NUMERALS

- **101**: digital tuner
- **102**: transfer rate detector
- **103**: pre-recording processing buffer
- **104**: recording processing type selector
- **105**: stream recording processor
- **106**: re-encoding recording processor
- **108**: system controller
- **109**: post-recording processing buffer
- **100**: recorder
- **110**: write head
- **111**: medium type recognizing section
- **112**: storage medium
- **113**: identification signal generating section
- **115**: video recording mode indicating section
- **116**: recording processing section
- **117**: write rate setting section

### BEST MODE FOR CARRYING OUT THE INVENTION

Hereinafter, preferred embodiments of a recorder according to the present invention will be described with reference to the accompanying drawings.

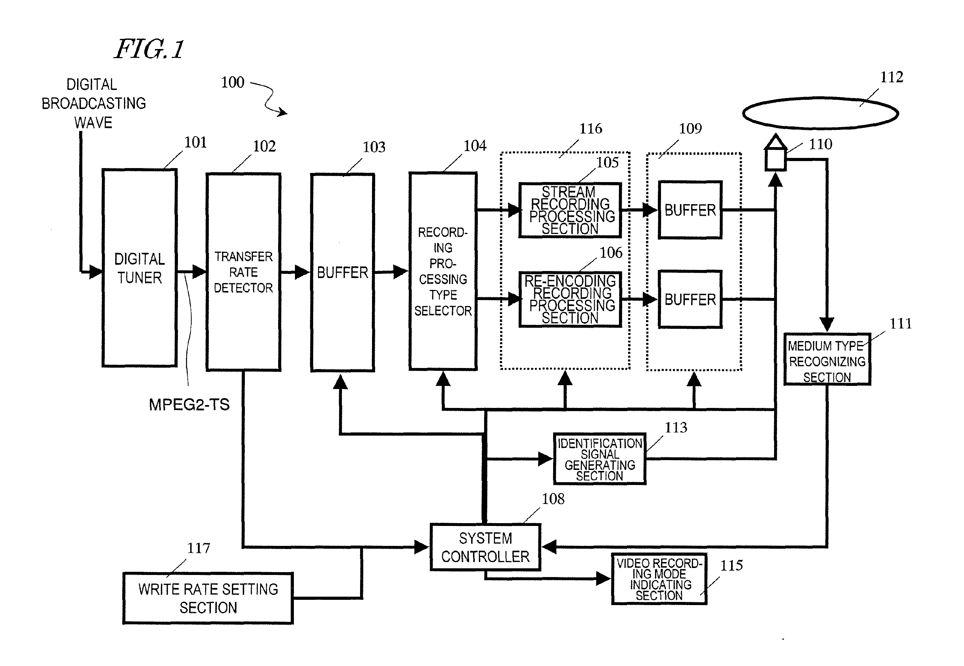

FIG. **1** shows an arrangement of functional blocks for a recorder **100** according to a preferred embodiment of the present invention. The recorder **100** includes a digital tuner **101,** a transfer rate detector **102,** buffers **103** and **109,** a recording processing type selector **104,** a system controller **108,** a write head **110,** a medium type recognizing section **111,** an identification signal generating section **113,** a video recording mode indicating section **115,** a recording processing section **116** and a write rate setting section **117.**

The recorder **100** extracts a digital stream representing a particular program from digital broadcasting waves, subjects the stream to a predetermined type of processing, and then writes it on a storage medium **112.** In this preferred embodiment, the digital stream is supposed to be a known MPEG-2 transport stream. An MPEG-2 transport stream (which will be simply referred to herein as a "transport stream" or "TS") is used in BS digital broadcasting in Japan, for example. In a transport stream, a video stream that has been compression-coded by the MPEG-2 video encoding technique and an audio stream that has been compression-coded by the AAC encoding technique are multiplexed together.

Also, in this preferred embodiment, the storage medium **112** is supposed to be an ultrahigh density RAM medium or a DVD-RAM. The ultrahigh density RAM medium has a bigger storage capacity than a DVD-RAM and a data stream can be written on the ultrahigh density RAM medium at a higher write rate than on a DVD-RAM. Examples of known ultrahigh density RAM media include a Blu-ray Disc (BD) and an HD-DVD. On these media, smaller recording pits or marks can be made with a laser beam (e.g., a blue laser beam) that has a shorter wavelength than a red laser beam.

In the following description, the ultrahigh density RAM medium is supposed to be a BD, which has a maximum storage capacity of 50 GB and allows for a write rate of 33 Mbps. A transport stream can be stored on a BD with its data structure maintained.

On the other hand, the DVD-RAM has a maximum storage capacity of 4.7 GB and allows for a write rate of 10.08 Mbps. A transport stream is converted into an MPEG-2 program stream (which will be simply referred to herein as a "program stream") and then recorded on a DVD-RAM.

The recorder **100** may be implemented as an optical disk recorder that can record a program on both a BD and a DVD-RAM. In FIG. **1,** the storage medium **112** is shown along with the recorder **100** for convenience sake only. Actually, the storage medium **112** is removable and does not form part of the recorder **100.**

Hereinafter, respective components of the recorder 100 will be described one by one.

The digital tuner **101** receives digital broadcasting waves, performs tuning processing in response to the user's instruction on tuning, and outputs a transport stream representing the program selected. More specifically, the digital tuner **101** extracts program data of a selected program from a transport stream in which program data representing a single program or a plurality of programs has been superposed one upon the other. Then, the digital tuner **101** makes a new transport stream based on the program data extracted and outputs the stream. The transport stream is made up of a plurality of TS packets, which store the program data of mutually different programs. That is why the program data is extracted on a TS packet basis.

The transfer rate detector **102** detects the transfer rate of the incoming transport stream and provides information specifying the transfer rate detected for the system controller **108.** Also, the transfer rate detector **102** outputs the incoming transport stream as it is to the buffer **103.**

The buffer **103** temporarily stores the transport stream that has been supplied from the transfer rate detector **102.** The buffer **103** is controlled by the system controller **108** so as to temporarily retain the transport stream until the recording processing section **116** gets ready. Following the instruction given by the system controller **108,** the buffer **103** outputs the transport stream saved to the recording processing type selector **104** as it is.

The recording processing type selector **104** is controlled by the system controller **108** so as to select one of the multiple recording processing sections that the recording processing section **116** has. That is to say, the recording processing type selector **104** selects either a stream recording processing section **105** or a re-encoding recording processing section **106** to process the transport stream supplied from the buffer **103.**

The system controller **108** may be a central processing unit (CPU), for example, and controls the overall operation of the recorder **100.**

The buffer **109** also temporarily stores the digital data stream that is going to be written on the storage medium **112.** More specifically, the buffer **109** temporarily stores the digital data stream that has been output from the recording processing section **116** until the data stream is written on the storage medium **112.** In this case, the digital stream is one of a transport stream and a program stream, which is selected as a result of the processing done by the recording processing section **116** to be described later. In the example shown in FIG. **1,** the output of the stream recording processing section **105** and the output of the re-encoding recording processing section **106** are stored in two different buffers. However, these buffers may be combined into a single buffer.

The write head **110** is an optical pickup unit, which irradiates the storage medium **112** loaded with a laser beam that has a wavelength associated with the type of the storage medium **112,** thereby reading and writing data from/on the storage medium **112.**

The medium type recognizing section **111** recognizes the type of the optical disk loaded in the recorder **100.** In this preferred embodiment, the medium type recognizing section **111** determines whether the medium inserted is a DVD-RAM or a BD. For example, disk type information showing the type of the storage medium may be recorded on an innermost area of the storage medium during the manufacturing process thereof, and then read optically by the medium type recognizing section **111** using the write head **110.** Alternatively, the medium type recognizing section **111** may also recognize the type of the given storage medium by detecting the intensity of the laser beam that has been radiated toward, and then reflected from, the storage medium because the intensity of the reflected light changes according to the type of the medium. Furthermore, if a storage medium housed in a cartridge is loaded, the type of the storage medium may also be recognized by the shape of the cartridge that changes according to the type of the storage medium. In any case, the type of the optical disk loaded may be recognized by detecting either the optical property or physical property of the disk. The medium type recognizing section **111** outputs information showing the type of the optical disk as a result of the type recognition.

The identification signal generating section **113** generates a signal that identifies the type of the recording processing (which will be referred to herein as an "identification signal"). The identification information represented by the identification signal is written on the storage medium **112** loaded. The contents of the processing done, and the identification signal generated, by the identification signal generating section **113** will be described in detail later.

The video recording mode indicating section **115** is provided to show the contents of the selected type of recording processing and may be either an electric light display tube or an LCD panel on a front panel or an on-screen display to be superimposed on another video on a TV screen.

The recording processing section **116** includes the stream recording processing section **105** and the re-encoding recording processing section **106.**

The stream recording processing section **105** subjects the incoming transport stream to a predetermined type of processing and then outputs it to the buffer **109** directly. The predetermined type of processing does not include a compression coding process. More specifically, the stream recording processing section **105** adds headers of 4 bytes in total, including those defining the arrival times of packets (which are called "arrival time stamps (ATS)") and each having a size of 30 bits and those defining copyright information by the number of times of copying (which are called "copy permission indicators (CPI)") and each having a size of 2 bits, to each TS packet (of 188 bytes). The resultant stream will be written on the BD. The stream to be written on the BD is not a transport stream, strictly speaking. But since just the ATS has been added thereto, the stream still maintains the original data structure as a transport stream. That is why this stream will be also referred to herein as a "transport stream".

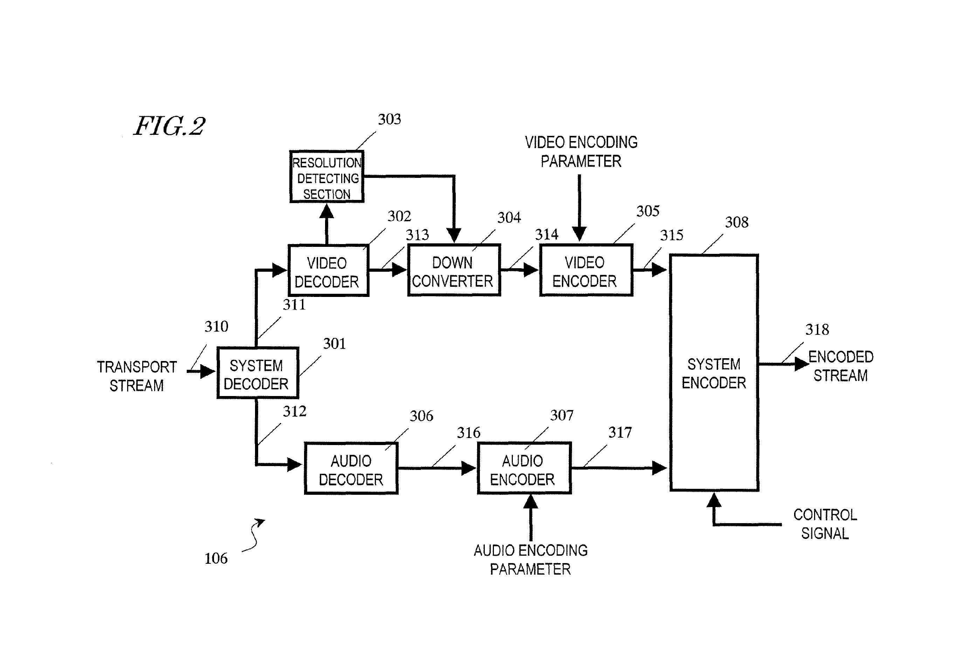

On the other hand, the re-encoding recording processing section **106** re-encodes the video and audio of the incoming transport stream using predetermined encoding parameters and then outputs it as either a program stream or a transport stream. The re-encoding recording processing section **106** will be described in further detail later with reference to FIG. **2.** It should be noted that the headers including the ATS and CPI have also been added to the transport stream to be output from the re-encoding recording processing section **106.**

The write rate setting section **117** includes an interface that allows the user to set his or her expected write rate. The interface of the write rate setting section **117** may be implemented as a button, a remote controller or a numeric keypad on the front panel of a video recorder or a graphical user interface on its screen, for example. The write rate setting section **117** provides information specifying the selected write rate for the system controller **108.**

As a result of the operation done by the user of the recorder **100,** the write rate setting section **117** receives an instruction on an extra extended play (EXP) mode, an extended play (XP) mode, or a standard play (SP) mode. These video recording time modes are reflected on the encoding parameters of the re-encoding recording processing section **106.** More specifically, if the SP mode is selected, the video encoder **305** (see FIG. **2)** is controlled by inputting encoding parameters thereto such that the encoding process is carried out at a lower bit rate than in the XP mode to increase the compression rate. For example, the XP mode may have an encoding rate of 10.0 Mbps and the SP mode may have an encoding rate of 5.0 Mbps. The write rate is set in association with a recording mode such as the EXP mode or the XP mode according to this preferred embodiment but may also be defined by a numerical value. Optionally, another recording mode such as a long play (LP) mode with an encoding rate of about 2.5 Mbps may also be provided.

As for the audio encoder **307** (see FIG. **2),** the encoding parameters may also be set in association with the recording time modes in the same way. The audio recording rates may be either determined automatically according to the video recording rates or arbitrarily specified by the user independently of the video recording rates. In the example described above, one of the two modes (i.e., the SP mode and the LP mode) is selected. However, this is just an example. Alternatively, one of three or more modes may be selected or the user may directly enter a numeral specifying his or her requested write rate using a numeric keypad, for example.

Next, the re-encoding recording processing section **106** of this preferred embodiment will be described in detail with reference to FIG. **2,** which shows an arrangement of functional blocks for the re-encoding recording processing section **106.** The re-encoding recording processing section **106** includes a system decoder **301,** a video decoder **302,** a resolution detector **303,** a down converter **304,** a video encoder **305,** an audio decoder **306,** an audio encoder **307,** and a system encoder **308.** The re-encoding recording processing section **106** once decodes the incoming transport stream **310** and then subjects it to a re-encoding process, thereby outputting an encoded stream.

The system decoder **301** analyzes the incoming transport stream **310** and splits it into a video stream **311** and an audio stream **312.** The video decoder **302** decodes the video stream **311** and outputs a decoded video stream **313.** In this preferred embodiment, decoding is performed compliant with the MPEG-2 Video standard.

The resolution detector **303** detects the video resolution of the video stream **311.** Examples of resolutions to be detected include 1920 × 1080 × 29.97, 1440 × 1080 × 29.97, 1280 × 720 × 59.94, × 20 × 480 × 59.94, and 720 × 480 × 29.97, each of which is the product of the number of horizontal samples, the number of vertical samples and the frame frequency. The resolution detector **303** reads resolution information, which is described in the management information of the video stream **311,** thereby detecting the resolution. According to the MPEG-2 Video standard, for example, the resolution information is described in the sequence header.

The down converter **304** converts the resolution of the decoded video stream **313** into a predetermined resolution and outputs a down-converted video stream **314.** For example, the down converter **304** converts the resolution such that the decoded video stream **313** has a resolution of 720 × 480 × 29.97. This processing is realized as a combination of low-pass filtering processing and sampling processing. If the decoded video stream **313** has a resolution of 720×480×29.97, the down converter **304** outputs the video stream as it is without converting its resolution.

The video encoder **305** encodes the down-converted video stream **314,** thereby outputting an encoded video stream **315.** An encoding parameter (such as an encoding compression rate) required for the encoding processing is supplied from the system controller **108.** The encoding process may be, but does not have to be, performed by the MPEG-2 Video encoding method.

The audio decoder **306** decodes the audio stream **312** and outputs a decoded audio stream **316.** In this preferred embodiment, the audio decoder **306** performs decoding processing by the AAC encoding method.

The audio encoder **307** encodes the decoded audio stream **316** following the encoding parameter supplied from the system controller **108,** thereby outputting an encoded audio stream **317.** The encoding processing may be, but does not have to be, performed by the MPEG-1 Audio Layer 2 method.

The system encoder **308** multiplexes the encoded video stream **315** and the encoded audio stream **317** together, thereby outputting an encoded stream **318.** The system encoder **308** selectively outputs either a transport stream or a program stream. The selection is made in response to a control signal supplied from the system controller **108.**

As described above, the re-encoding recording processing section **106** once decodes the video and audio streams of the incoming transport stream, encodes them again using predetermined encoding parameters, and then outputs either a program stream or a transport stream. This processing is called "re-encoding processing". The processing of recording the stream that has been subjected to the re-encoding processing on either a DVD-RAM or a BD will be referred to herein as "re-encoding recording processing".

It should be noted that if the incoming video or audio stream has the same encoding parameter as the predetermined one, then the video or audio does not have to be re-encoded but just the transport stream may be converted into a program stream. In that case, the system encoder **308** may receive the video stream **311** and the audio stream **312** and perform system encoding processing on the streams. During the system encoding processing, the encoded video and audio data are used as they are. However, the TS packet header of the transport stream is analyzed by the system encoder **308** and converted into a PS pack header or an RDI pack of a program stream.

In the same way, even when only the video or only the audio is re-encoded, just the stream to be re-encoded is decoded and encoded, while the stream not to be re-encoded may be input to the system encoder **308** directly.

In the exemplary re-encoding processing described above, a decoded signal, obtained as a result of decoding processing, is supposed to be re-encoded. However, the present invention is in no way limited to that specific preferred embodiment. Alternatively, only a portion of the stream may be decoded and only that decoded portion may be re-encoded. For example, in decoding processing that follows an MPEG encoding method using DCT encoding processing, a variable-length-decoded symbol may be inversely quantized to obtain a DCT coefficient, which is then subjected to an inverse DCT transform. As a result, a decoded video signal can be obtained. In encoding processing on the other hand, a DCT coefficient obtained by a DCT transform may be quantized and then variable-length encoded. In this manner, a video stream can be obtained. Optionally, the video decoder **302** may finish its processing by restoring the original DCT coefficient. In that case, the video encoder **305** may quantize the decoded DCT coefficient following the encoding parameter and then subject it to variable-length encoding processing to generate a video stream **315.** Then, the inverse DCT transform and the DCT transform that should have been performed by the video decoder **302** and the video encoder **305,** respectively, can be omitted.

Also, if motion compensated predictive coding is carried out as in an MPEG encoding method, then re-encoding processing may be performed by using a motion vector included in the incoming video stream. By adopting such processing, motion vector detecting processing that should have been done by the video encoder **305** can be omitted.

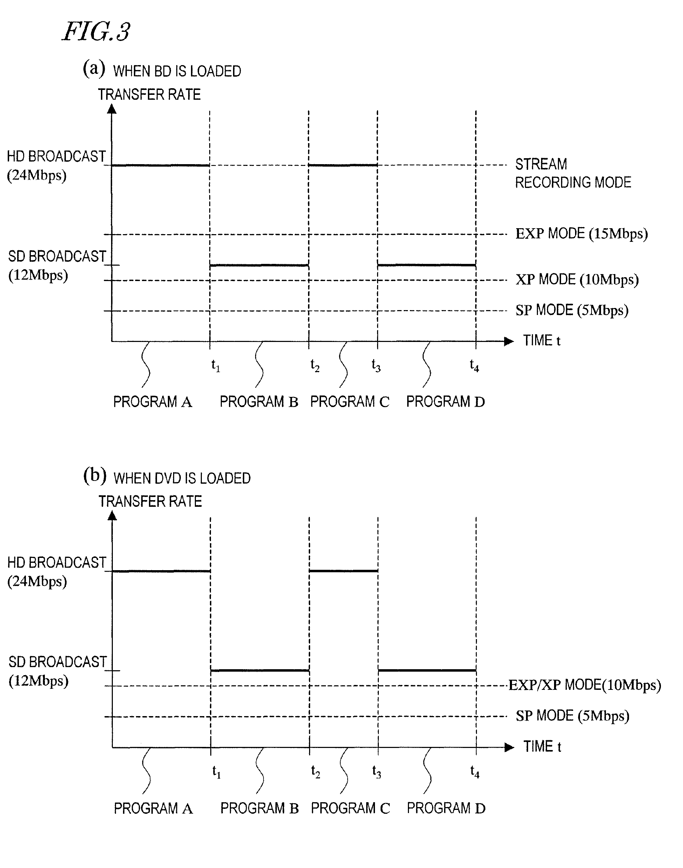

Hereinafter, it will be outlined with reference to FIG. **3** how the recorder **100** of this preferred embodiment operates.

FIG. **3(a)** shows correlation between the transfer rate of a digital broadcast stream and write rates associated with respective recording modes when a BD is loaded. On the other hand, FIG. **3(b)** shows correlation between the transfer rate of a digital broadcast stream and write rates associated with respective recording modes when a DVD is loaded. In the following description, a Japanese BS Digital broadcast will be taken as an example.

In FIGS. **3(a)** and **3(b),** the ordinate indicates the transfer rate of a transport stream representing a digital broadcast. Digital broadcasts are roughly classifiable into HD broadcasts and SD broadcasts, which are supposed to have a transfer rate of 24 Mbps and a transfer rate of 12 Mbps, respectively.

On the other hand, the abscissa of FIGS. **3(a)** and **3(b)** indicates the time. Also shown on the right-hand side of FIGS. **3(a)** and **3(b)** are respective recording modes associated with the write rates. Referring to FIG. **3(a),** the recording modes include a stream recording mode, an EXP mode (with a write rate of 15 Mbps), an XP mode (with a write rate of 10 Mbps), and an SP mode (with a write rate of 5 Mbps). The write rate of the stream recording mode is supposed to be 24 Mbps but its upper limit is equal to the BD's highest possible write rate of 33 Mbps. The same goes for FIG. **3(b),** too. However, DVDs have no stream recording mode and both the EXP and XP modes thereof have a write rate of 10 Mbps corresponding with the highest possible write rate of DVDs.

In recording a digital broadcast program, the system controller **108** of the recorder **100** gets information about the user's requested write rate through the write rate setting section **117.** This write rate corresponds to the recording mode described above. The system controller **108** also receives information defining the type of the optical disk loaded from the medium type recognizing section **111** and acquires information about the highest possible write rate for the storage medium **112** in accordance with that information. The highest possible write rate of BDs is 33 Mbps and that of DVDs is 10 Mbps.

By adopting the lower one of these two write rates, that is either the user's requested write rate or the highest possible write rate for the storage medium **112,** the recorder 100 records a digital broadcast. In other words, the lower write rate means the highest write rate that the recorder **100** can adopt. This value will be referred to herein as the "maximum write rate". It should be noted that it is not always appropriate to treat only the user's requested write rate as the "maximum write rate". Even if no storage medium **112** is loaded, the user can also set the recording mode. That is why the write rate concerning the storage medium **112** needs to be considered, too.

Look at FIG. **3(a)** now. Suppose the recorder **100** is now loaded with a BD and the user has selected the EXP mode (with a write rate of 15 Mbps) as the recording mode. Since the highest possible write rate for BDs is 33 Mbps, the maximum write rate is 15 Mbps in this case.

First, in recording Program A as an HD broadcast, the recorder **100** knows that the transfer rate of the HD broadcast (24 Mbps) is higher than the maximum write rate of 15 Mbps. Then the recorder **100** re-encodes the transport stream representing the HD broadcast, thereby restructuring it into a transport stream for the EXP mode (15 Mbps). After that, the recorder **100** writes the newly generated transport stream on a BD.

Next, suppose Program A ends and Program B as an SD broadcast starts at a time **t1.** If Program B should also be recorded, the recorder **100** senses that transport streams representing these two programs have different transfer rates and knows that the transfer rate of the newly selected SD broadcast (of 12 Mbps) is lower than the maximum write rate of 15 Mbps. Then, the recorder **100** stream-records the transport stream representing the SD broadcast.

Since the recording mode currently selected is the EXP mode, the recorder **100** could re-encode the 12 Mbps transport stream to restructure it into a 15 Mbps transport stream. However, even if the re-encoding process were carried out, the quality of the resultant video could not be higher than the original one. Since an MPEG-2 encoding process is an irreversible compression process, the video quality would rather be debased. For that reason, the stream recording can record the program with its original video quality maintained.

Also, when the programs are switched into Program C, which is an HD broadcast from a time **t2** through a time **t3,** and into Program D, which is an SD broadcast from the time **t3** through a time **t4,** the transfer rate of the transport stream is compared to the maximum write rate. And it is determined by the same criterion whether the re-encoding process or the stream recording process should be carried out.

If the user has selected either the XP mode or the SP mode, the maximum write rate will be 10 Mbps or 5 Mbps. Since the respective transfer rates of HD and SD broadcasts are always higher than the maximum write rate, the recorder 100 always performs the re-encoding process. In the example shown in FIG. **3(b)**, the recorder **100** always performs the re-encoding process for quite the same reason.

As is clear from the foregoing description, the maximum write rate functions as a threshold value for selecting a type of recording processing.

The following Table 1 shows a list of various types of recording processing to be selected in recording a program on a BD:

**Table 1:**

| Input source | | EXP mode | XP mode | SP mode | Stream mode |
|---|---|---|---|---|---|
| BS Digital | HD broadcast | Re-encoding recording (15 Mbps) | Re-encoding recording (10 Mbps) | Re-encoding recording (5 Mbps) | Stream recording |
| | SD broadcast | Stream recording | Re-encoding recording (10 Mbps) | | |
| Terrestrial digital | HD broadcast | Re-encoding recording (15 Mbps) | Re-encoding recording (10 Mbps) | | |
| | SD broadcast | Stream recording | Stream recording | | |

On the other hand, the following Table 2 shows a list of various types of recording processing to be selected in recording a program on a DVD:

**Table 2:**

| Input source | | EXP/XP mode | SP mode |
|---|---|---|---|
| BS digital | HD broadcast | Re-encoding recording (10 Mbps) | Re-encoding recording (5 Mbps) |
| | SD broadcast | Re-encoding recording (10 Mbps) | |
| Terrestrial digital | SD broadcast | Re-encoding recording (10 Mbps) | |
| | SD broadcast | Stream recording | |

The example described above relates to HD and SD broadcasts of BS Digital Broadcasting. However, the present invention is also applicable to terrestrial digital broadcasting in a similar manner. The following Table 3 shows exemplary transfer rates of digital telecasts.

**Table 3:**

| Input source | | Transfer rate |
|---|---|---|
| BS digital | HD broadcast | 24 Mbps |
| | SD broadcast | 12 Mbps |
| Terrestrial digital | HD broadcast | 18 Mbps |
| | SD broadcast | 9 Mbps |

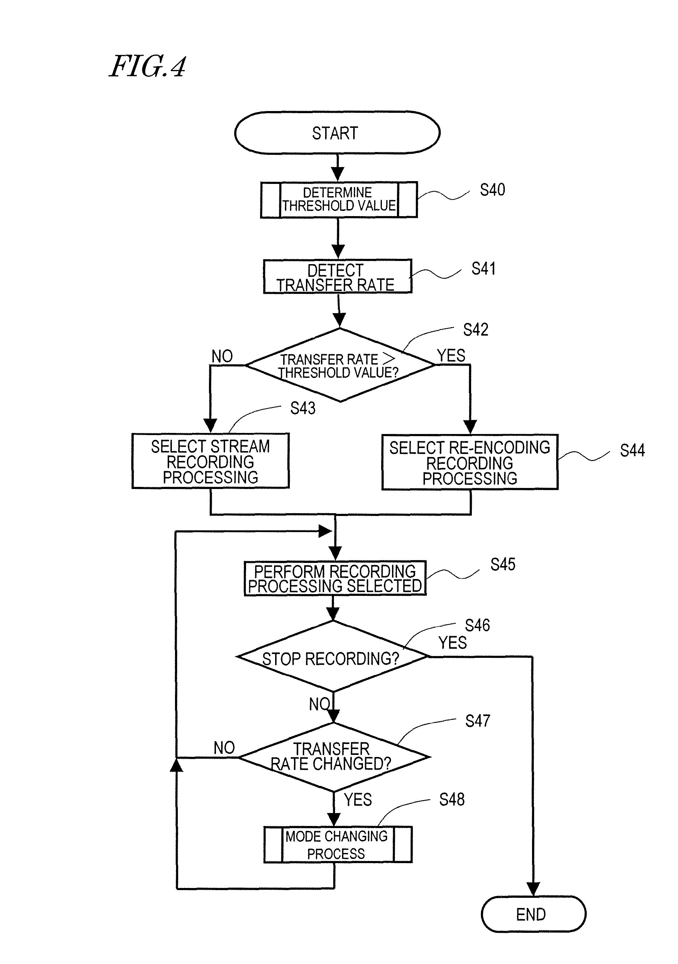

Hereinafter, it will be described with reference to FIGS. **4** through **6** how the recorder **100** operates.

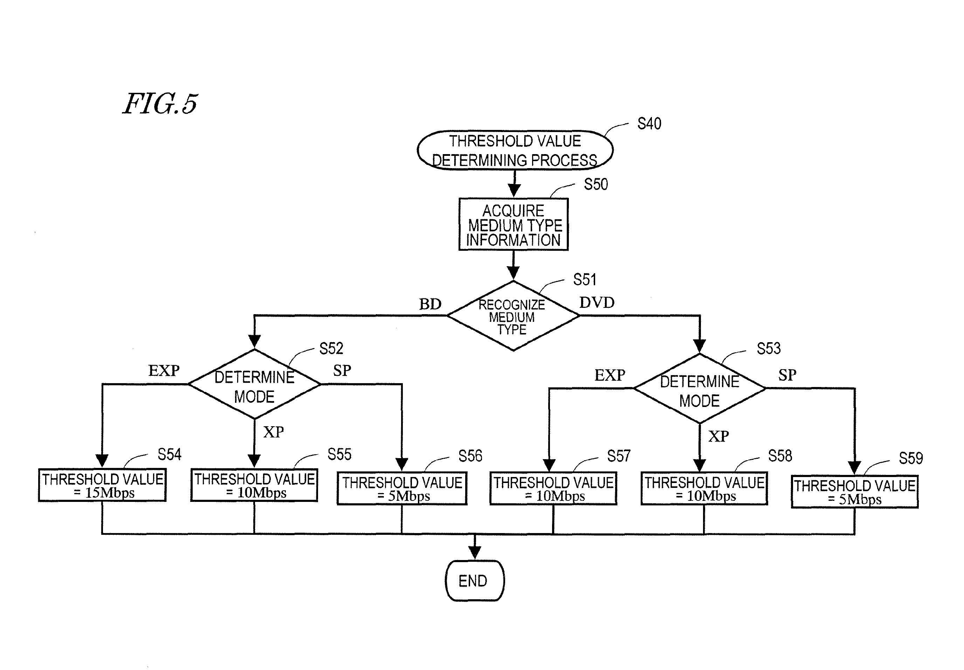

FIG. **4** shows the procedure of processing to be done by the recorder **100.** First, in Step **S40,** the system controller **108** of the recorder **100** performs a threshold value determining process, which is the process of defining the maximum write rate described above. This process will be described in detail later with reference to FIG. **5.**

When the digital tuner **101** starts receiving digital broadcasting waves and outputting a transport stream, the transfer rate detector **102** receives the transport stream and detects its transfer rate in Step. More specifically, the following processing steps are carried out.

The following Table 4 defines the default highest transfer rates (i.e., highest bit rates) on a service-by-service basis.

**Table 4:**

| | | |
|---|---|---|
| Digital TV service | 1080I | 24 Mbps |
| | 720P | 24 Mbps |
| | 480P | 12 Mbps |
| | 480I | 11 Mbps |
| | Multi-view | 24 Mbps |
| Digital audio service | | 1.1 Mbps |
| Data service | | 2.2 Mbps |

The transfer rate detector **102** gets the service type from service_type field of a service list descriptor in Network Information Table (NIT) of the transport stream and also gets information about the resolution (which is 1080I, 720P, 480P or 480I) from the component_type field of a component descriptor in Event Information Table (EIT). It is determined, by seeing if there is a component group descriptor in the EIT, whether it is multi-view or not.

It should be noted that NIT and EIT are both pieces of known PSI/SI information and are both stored in TS packets that form the transport stream. To get those packets, the stream may be searched by reference to the packet identifiers (PIDs) of the packets in which those tables are stored. For example, the packet that stores the NIT and the packet that stores the EIT may have PIDs "0x0010" and "0x0012", respectively. That is why the processing described above may be performed by extracting packets that have these values as the PIDs.

Referring to Table 4, shown on the right-hand side of the resolutions acquired are their associated highest transfer rates. Specifically, the resolutions 1080I and 720P and multi-view have the highest bit rate of 24 Mbps, the resolution 480P has the highest bit rate of 12 Mbps, and the resolution 480I has the highest bit rate of 11 Mbps.

The transfer rate detector **102** acquires information about the highest bit rate from the maximum_bit_rate field of a digital copy control descriptor that is stored in either Program Map Table (PMT) or EIT of the transport stream.

In the example described above, the transfer rate is supposed to be gotten from a descriptor compliant with rules and regulations about the use of BS Digital Broadcasting. Alternatively, the transfer rate may also be calculated on how much data has been received within a predetermined amount of time (e.g., one second).

To detect the transfer rate, a buffer for temporarily storing the data is needed. And the buffer for that purpose and the buffer **103** may share the same memory.

Next, in Step **S42,** the system controller **108** compares the threshold value that has been determined in Step **S40** to the value of the transfer rate that has been detected in Step **S41.** If the transfer rate is equal to or smaller than the threshold value, the process advances to Step **S43.** On the other hand, if the transfer rate is greater than the threshold value, then the process advances to Step **S44.** And if the transfer rate is equal to the threshold value, the process may advance to Step **S44.**

In Step **S43,** in accordance with the instruction given by the system controller **108,** the recording processing type selector **104** selects such a processing route that outputs the transport stream to the stream recording processing section **105.** After that, the process advances to Step **S45.** In Step **S44,** in accordance with the instruction given by the system controller **108,** the recording processing type selector **104** selects such a processing route that outputs the transport stream to the re-encoding recording processing section **106.** After that, the transport stream is output to the selected processing route. If a DVD has been loaded, the transfer rate becomes greater than the threshold value (see FIG. **3(b),** for example), and therefore, the process advances to re-encoding recording processing step **S44.** It should be noted that after the types of recording processing have been changed, the processing step of converting the transport stream into a program stream is also carried out during the recording processing.

In Step **S45,** the recording processing section **116** gets the transport stream processed by either the stream recording processing section **105** or the re-encoding recording processing section **106** and writes the transport stream on the storage medium **112** loaded.

In the next processing step **S46,** the system controller **108** determines whether or not to stop the recording processing. For example, if the user has pressed down the stop button (not shown) of the recorder **100** or when the preset video recording end time has come, the system controller **108** instructs the digital tuner **101** to stop receiving the digital broadcasting waves and stops the recording processing. If the recording processing should be continued without a break, then the process advances to Step **S47.** It should be noted that if data is already present in the buffers **103** and **109** or if the transport stream is being processed by the recording processing section **116,** then the recording processing should be carried on until all of those data and streams are written on the storage medium **112.** After having confirmed that all of them have been written successfully, the system controller **108** stops the recording processing.

In Step **S47,** it is determined whether or not the transfer rates of the transport stream have changed while the recording processing is being carried on. This processing step is performed for the following reason. Specifically, if the digital tuner **101** has received a number of transport streams representing multiple programs continuously, the transfer rates may change when the transport streams switch. In this preferred embodiment, it is determined by the transfer rate whether the stream recording processing section **105** or the re-encoding recording processing section **106** should be used in the recording processing section **116.** That is why to determine whether or not to change the types of recording processing, the variation in transfer rate is detected. If the transfer rates have changed, the process advances to Step **S48.** Otherwise, the process goes back to Step S45 to carry on the current recording processing.

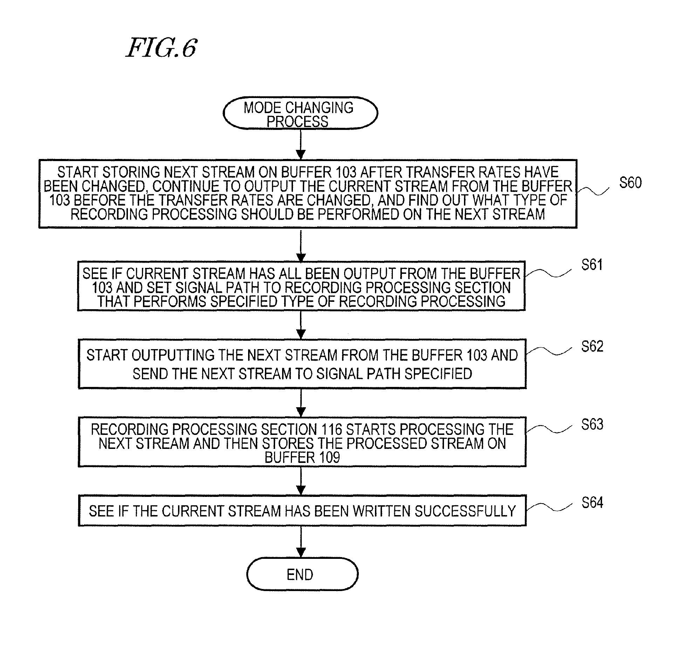

In Step **S48,** the recorder **100** changes recording modes specifying the types of recording processing. This processing step will be described in detail later with reference to FIG. **6.** After that, the process goes back to Step **S45** to continue the same processing until the recording processing should be stopped.

In the processing described above, if the transfer rate of the digital stream, which has been detected by the transfer rate detector **102,** is higher than the maximum write rate, the system controller **108** controls the recorder **100** such that the recording processing is carried out by the re-encoding recording processing section **106,** which re-encodes the incoming digital stream such that the write rate does not exceed the maximum write rate.

Even in a situation where the transfer rate of the input signal is higher than the user's requested write rate or the maximum write rate for the given medium, if the re-encoding recording processing section **106** is selected automatically, the write operation can be done so as to satisfy the user's request and the constraint of the storage medium.

On the other hand, if the transfer rate of the digital stream, which has been detected by the transfer rate detector **102,** is equal to or lower than the maximum write rate, the system controller **108** controls the recorder **100** such that the recording processing is carried out by the stream recording processing section **105.** That is to say, the incoming transport stream is directly written on the storage medium **112.** As a result, the input stream can be written and stored with high fidelity without causing any encoding noise that is often observed in the re-encoding process, for example.

Next, the process of determining the threshold value, corresponding to the processing step **S40** mentioned above, will be described in detail with reference to FIG. **5.**

FIG. **5** shows the procedure of the threshold value determining process. First, in Step **S50**, the medium type recognizing section **111** acquires information showing the medium type of the storage medium 112 currently loaded in the recorder **100.** Next, in Step **S51,** the system controller **108** determines, in accordance with the medium type information acquired, whether the storage medium **112** currently loaded is a BD or a DVD. If the storage medium **112** has been recognized as a BD, the process advances to Step **S52.** On the other hand, if the storage medium **112** has been recognized as a DVD, then the process advances to Step **S53.**

In Steps **S52** through **S56,** the system controller **108** determines the threshold value according to the recording mode that has been specified by the user. Specifically, if the EXP mode has been selected, the system controller **108** advances to Step **S54** to set the threshold value to 15 Mbps. On the other hand, if the XP mode has been selected, the system controller **108** sets the threshold value equal to 10 Mbps in Step **S55.** And if the SP mode has been selected, the system controller **108** sets the threshold value equal to 5 Mbps in Step **S56.**

Meanwhile, in Step **S53** and Steps **S57** through **S59,** the system controller **108** also determines the threshold value according to the recording mode that has been specified by the user. Specifically, if the EXP mode or the XP mode has been selected, the system controller **108** sets the threshold value equal to 10 Mbps in Step **S57** or **S58.** And if the SP mode has been selected, the system controller 108 sets the threshold value equal to 5 Mbps in Step **S59.** By performing these processing steps, the threshold value to be used in FIG. **4** is determined.

Next, the mode changing process, corresponding to the processing step **S48** mentioned above, will be described in detail with reference to FIG. **6.**

FIG. **6** shows the procedure of the mode changing process. First, in Step **S60**, the system controller **108** starts to store the next stream, which will start after the transfer rates have been changed, on the buffer **103.** It should be noted that the next stream has not been output yet at this point in time.

In this case, the system controller **108** continues to output the current stream that has already been stored in the buffer **103** before the transfer rates have been changed, and finds out what type of recording processing should be performed on the next stream. This process corresponds to the processing steps **S40** through **S42** shown in FIG. **4.** As a result, it is determined whether the next stream should be processed by the stream recording processing section **105** or the re-encoding recording processing section **106.**

In Step **S61,** the system controller **108** sees if the current stream has all been output from the buffer **103.** In other words, the system controller **108** sees if the transport stream before the transfer rates are changed has all been sent to the recording processing section **116.** Since the buffer **103** is provided, no part of the stream is lost while the types of recording processing are changed. As a result, a signal path can be set to the recording processing section that performs the specified type of recording processing (i.e., either the stream recording processing section **105** or the re-encoding recording processing section **106).**

Then, in Step **S62,** the system controller **108** starts outputting the next stream from the buffer **103.** The stream should be output to either the stream recording processing section **105** or the re-encoding recording processing section **106** that is connected to the signal path specified in Step **S62.**

In the next processing step **S63,** the stream recording processing section **105** or the re-encoding recording processing section **106** of the recording processing section **116** receives the next stream, starts processing it and then stores the processed stream on the buffer **109.** At this point in time, the processed stream has not been output yet.

Subsequently, in Step **S64,** the system controller **108** sees if the current stream has been processed completely by the recording processing section **116** and if the stream that has been stored in the buffer **109** has been written fully on the storage medium **112** after the former processing. As a result, no part of the stream being output is lost while the types of recording processing are changed.

When these two points are confirmed, the next stream processed by the recording processing section **116** is ready to be written on the storage medium **112.** The stream is actually written in Step **S45** shown in FIG. **4.** In this manner, the processing procedure shown in FIG. **6** is completed.

Hereinafter, the process shown in FIG. **6** will be described more specifically. Suppose the transfer rates of the digital stream **102** are changed from a relatively high rate into a relatively low rate. These "high" and "low" rates may be relative ones. For example, suppose a transport stream representing an HD broadcast is switched into a transport stream representing an SD broadcast. The storage medium **112** is supposed to be a BD. And in the recording processing section **116,** the re-encoding recording processing section **106** is supposed to be switched into the stream recording processing section **105.**

The transfer rate detector **102** senses that the transfer rates of the transport streams have changed from the relatively high rate into the relatively low rate. Then, the transfer rate detector **102** provides information about this finding for the system controller **108.**

In response, the system controller **108** controls the recorder **100** such that the transport stream with the relatively low rate is not output from the buffer **103** to the recording processing section **116.** In the meantime, the buffer **103** retains the low-rate transport stream that should not be output.

Next, the system controller **108** controls the timing to start the recording processing by the stream recording processing section **105.** Then, the system controller **108** waits until it is confirmed that the high-rate transport stream has all been output from the buffer **103** to the re-encoding recording processing section **106.**

After it has been confirmed, the system controller **108** instructs the recording processing type selector **104** to output the incoming transport stream to the stream recording processing section **105.** Then, the system controller **108** instructs the buffer **103** to start outputting a low-rate transport stream to the recording processing type selector **104.** The stream that has been processed by, and output from, the stream recording processing section **105** gets stored in the buffer **109.** The system controller **108** instructs the buffer **109** of the stream recording processing section **105** to save the incoming stream without outputting it.

The system controller **108** waits until it is confirmed that the processed transport stream saved in the buffer **109** of the re-encoding recording processing section **106** has all been written on the storage medium **112.**

After it has been confirmed, the system controller **108** finally controls the recorder such that the transport stream that has been saved in the buffer **109** of the stream recording processing section **105** is written on the storage medium.

During this processing, when the recording processing section **116** changes the destinations of the outgoing transport stream from the re-encoding recording processing section **106** to the stream recording processing section **105,** it should be noted that until the current transport stream has all been output from the buffer **103,** the next transport stream, received after the change of the destinations, needs to be saved in the buffer **103.** This is because it takes some time to get the processing done by the re-encoding recording processing section **106.**

More specifically, the re-encoding recording processing section **106** once decodes and then re-encodes the transport stream every 0.5 seconds or every 1.0 second. That is why the current transport stream within the buffer **103** is output from the buffer **103** and then processed 0.5 seconds to 1.0 second later. The transport stream is stored in the buffer **103** until it is output. Consequently, until the current transport stream is output, the next transport stream cannot be output but needs to be stored in the buffer **103.**

It should also be noted that until the processed transport stream, output from the re-encoding recording processing section **106,** has been written on the BD **112,** the transport stream output from the stream recording processing section **105** needs to be stored in the buffer **109.**

As described above, it takes 0.5 seconds to 1.0 second for the re-encoding recording processing section **106** to process the current transport stream. On the other hand, the stream recording processing section **105** just outputs the incoming stream as it is, and therefore, causes almost no processing delay. That is why before the re-encoding recording processing section **106** finishes its processing, the processed stream could be output from the stream recording processing section **105.** Until the processed transport stream output from the re-encoding recording processing section **106** has been written on the BD **112,** the transport stream output from the stream recording processing section **105** cannot be written. For that reason, the transport stream output from the stream recording processing section **105** needs to be stored in the buffer **109.**

In performing the recording processing described above, it is effective to use the identification signal. More specifically, the identification signal generating section **113** preferably generates a signal that shows the type of the recording processing selected by the system controller **108** and then writes the identification information, represented by that signal, on the storage medium **112.** In this case, an identification signal that shows the fact that the recording processing has been done by the stream recording processing section **105** is generated. For example, the identification signal may have a value "0", which is written as a piece of the identification information on the storage medium **112.** Its storage location may be set within an area to store management information on the storage medium **112** (e.g., its innermost area). By writing such identification information represented by the identification signal, the player, for example, can see, during the playback operation, whether the recorded stream is the original encoded stream as transmitted as a BS Digital broadcast or an encoded stream that has been re-encoded by the re-encoding recording processing section **106.**

By checking out the value of the identification signal, the user can easily determine whether the video quality of the recorded program is equal to, or different from, that of the broadcast program. That is to say, if it can be seen that the encoded stream was recorded directly, the user can determine that the video quality of the recorded program is equal to that of the broadcast program. On the other hand, if it can be seen that a re-encoded encoded stream was recorded, then the user can determine that the video quality of the recorded program is inferior to that of the broadcast program.

Optionally, the recorder **100** can determine according to the type of the given medium whether the identification information should be written or not. For example, the identification information may not be written if it is a DVD-RAM but may be written if it is a BD. This is because on a BD, the stream recording processing section **105** may perform recording processing according to the type of the input signal but because on a DVD-RAM, the processing is done only by the re-encoding recording processing section **106,** not by the stream recording processing section **105.**

As the identification information, information showing that not only the stream recording processing but also re-encoding recording processing were performed may be written. Also, information about down conversion processing for the re-encoding recording processing (e.g., the resolution of the input signal) may also be included.

Next, it will be described how the video recording mode indicating section **115** indicates modes. The mode indication is important to allow the user to confirm his or her selected recording mode.

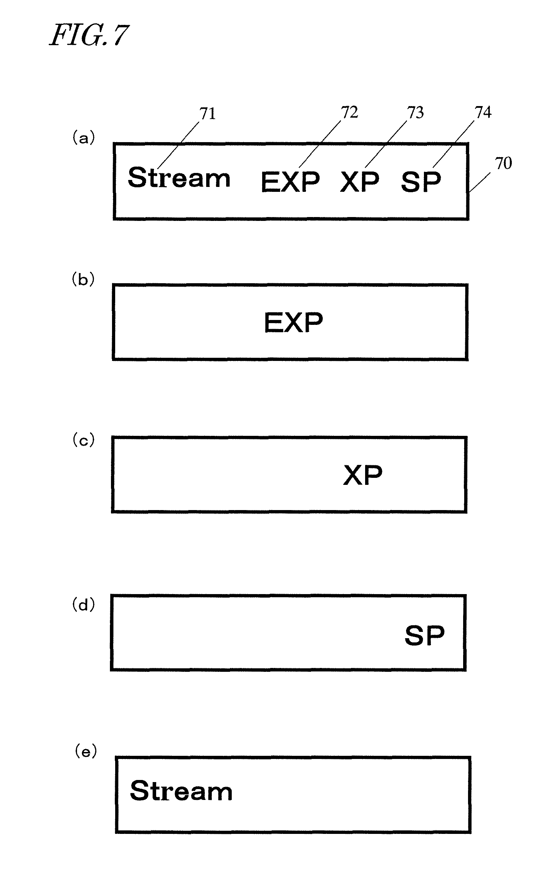

FIGS. **7(a)** through **7(e)** show a video recording mode indicator tube **70** as an example of the video recording mode indicating section **115.** The video recording mode indictor tube **70** includes four indicator sections that can light and indicate Stream **71,** EXP **72,** XP **73** and SP **74,** respectively. FIG. **7(a)** shows a situation where all of these four are lit and indicated.

FIGS. **7(c)** and **7(d)** show situations where only EXP, XP and SP are lit and indicated, respectively. These indicate that the re-encoding recording processing is performed as a matter of principle. In that case, the channel of BS Digital Broadcasting is selected and a digital broadcast program is recorded on either a BD or a DVD.

FIG. **7(e)** shows a situation where only "Stream" has been lit and indicated. This indicates that the stream recording processing is performed. In that case, the channel of BS Digital Broadcasting is selected and a digital broadcast program is recorded on a BD.

By providing the video recording mode indicator tube **70** as the video recording mode indicating section **115** as described above, the user can easily recognize what type of recording processing has been selected by the recorder **100** automatically.

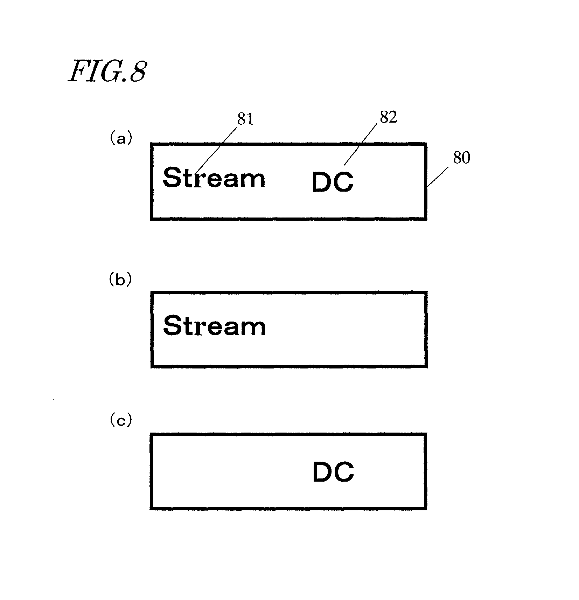

The contents indicated on the video recording mode indicator tube are not limited to these. For example, FIGS. **8(a)** through **8(c)** show a video recording mode indicator tube **80** as another example of the video recording mode indicating section **115.** The video recording mode indicator tube **80** includes two indicator sections, which can light and indicate Stream **81** and DC **82,** respectively. FIG. **8(a)** shows a situation where both of these are lit and indicated.

FIG. **8(b)** shows a situation where only "Stream" has been lit and indicated. This indicates that the stream recording processing is performed. In that case, the channel of BS Digital Broadcasting is selected and a digital broadcast program is recorded on a BD.

FIG. **8(c)** shows a situation where only "DC" has been lit and indicated. This indicates that the re-encoding recording processing is performed. In that case, the channel of BS Digital Broadcasting is selected and a digital broadcast program is recorded on a DVD-RAM.

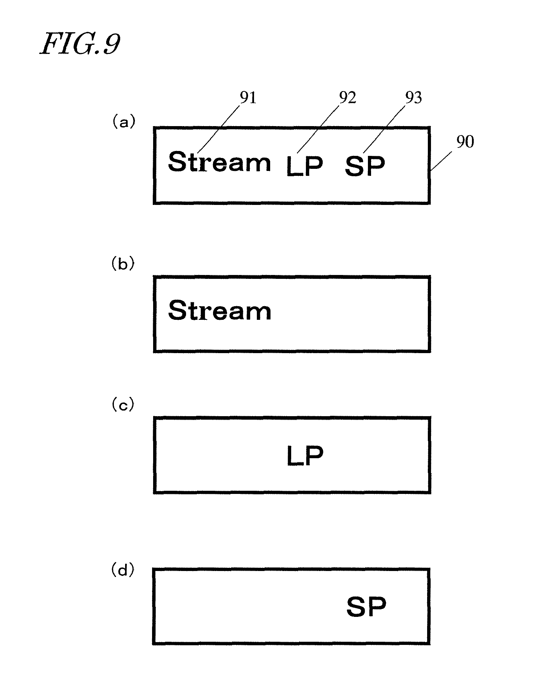

FIGS. **9(a)** through **9(d)** show a video recording mode indicator tube **90** as still another example of the video recording mode indicating section **115.** FIG. **9(a)** shows a situation where the entire indicator tube is lit and indicated. The video recording mode indicator tube **90** includes three indicator sections: Stream **91,** LP **92** and SP **93.** A portion of the video recording mode indicator tube **90** associated with the selected type of recording processing is lit.

FIG. **9(b)** shows a situation where only "Stream" has been lit and indicated. This indicates that the stream recording processing is performed. In that case, the channel of BS Digital Broadcasting is selected and a digital broadcast program is recorded on a BD.

FIG. **9(c)** shows a situation where only "LP" has been lit and indicated. This indicates that the re-encoding recording processing is performed. FIG. **9(d)** shows a situation where only "SP" has been lit and indicated. This indicates that the re-encoding recording processing is performed.

During the re-encoding recording processing, the encoding process is performed within the recorder, and therefore, the user cannot directly recognize the type of the processing being performed. Meanwhile, it is important for the user to know whether or not it is the stream recording processing to directly record the incoming digital stream. That is why by indicating the video recording time mode for the stream recording processing or the re-encoding recording processing as in the video recording mode indicator tube **90** shown in FIG. **9,** the user can recognize the video recording mode more easily. It should be noted that the video recording mode indicating section **115** is not limited to any of these examples but has only to provide information to identify at least one type of recording processing.

In the preferred embodiments described above, the recording processing type selector **104** selects, in the recording processing section **116,** whether the digital stream should be subjected to the stream recording processing or the re-encoding recording processing. However, a digital stream may be subjected to the re-encoding recording processing while being subjected to the stream recording processing. For example, in a situation where a number of streams can be written on multiple types of storage media **112** at the same time, while a transport stream is being written on a BD as it is, a program stream can be extracted from the transport stream and written on a semiconductor storage medium such as a DVD-RAM or an SD memory card.

Also, the recording processing section **116** is supposed to perform two types of recording processing using the stream recording processing section **105** and the re-encoding recording processing section **106.** However, a third type of recording processing may be provided in addition to, or in place of, those two types. For example, a self-encoding recording processing section may be provided to extract program data from input analog video and audio signals, subject it to a compression coding process to generate an encoded stream, and record the stream on a storage medium. This encoded stream may be either a program stream (PS) or a transport stream (TS).

These functions of the recorder **100** (such as those of the stream recording processing section **105** and re-encoding recording processing section **106** in the recording processing section **116)** may also be performed by executing a software program. For example, the recording processing section **116** may be a recording processor chip and the operations of the stream recording processing section **105** and re-encoding recording processing section **106** may be carried out by selectively running a type of firmware to perform the stream recording processing and another type of firmware to perform the re-encoding recording processing. Alternatively, the functions of the stream recording processing section **105** and re-encoding recording processing section **106** may also be carried out by making the system controller **108** execute a computer program.

The computer program may be stored in any of various types of storage media. Examples of preferred storage media include optical storage media such as optical disks, semiconductor storage media such as an SD memory card and an EEPROM, and magnetic recording media such as a flexible disk. Instead of using such a storage medium, the computer program may also be downloaded via a telecommunications line (over the Internet, for example) and installed in the recorder **100.**

### INDUSTRIAL APPLICABILITY

According to the present invention, even if two signals with mutually different transfer rates (such as an HD video signal and an SD video signal) are broadcast on the same channel, the recorder automatically determines the best recording modes for the HD video signal portions and the SD video signal portions according to the transfer rate. As a result, the program can be recorded with processing including a compression coding process and processing including no compression coding process switched automatically.

## Claims

1. A recorder having an ability to write a data stream on multiple types of storage media, the recorder comprising:
a receiving section for receiving a digital broadcasting wave and outputting a data stream;
a transfer rate detecting section, which receives the data stream and detects its transfer rate;
a recording processing section for performing either a first type of recording processing including a compression coding process or a second type of recording processing including no compression coding process on the data stream received; and
a selecting section for selecting either the first or second type of recording processing according to the transfer rate,
wherein the recorder writes the data stream that has been processed by the recording processing section on one of the storage media.

2. The recorder of claim 1, wherein the recording processing section performs encoding recording processing, including encoding the data stream, as the first type of recording processing and stream recording processing, including neither decoding nor encoding the data stream, as the second type of recording processing, respectively.

3. The recorder of claim 1, further comprising a recognizing section for outputting recognition information showing the type of the storage medium loaded,
wherein the selecting section selects either the first or second type of recording processing according to the type of the storage medium recognized as well.

4. The recorder of claim 1, wherein the receiving section outputs a plurality of data streams one after another, and
wherein the transfer rates of the data streams change when the data streams are switched, and
wherein the selecting section switches one of the first and second types of recording processing into the other according to the transfer rate of the data stream newly switched.

5. The recorder of claim 4, further comprising an input buffer for temporarily storing the data stream yet to be processed by the recording processing section,
wherein the input buffer stores the data stream while the selecting section is switching the types of recording processing.

6. The recorder of claim 4, further comprising an output buffer for temporarily storing the data stream that has been processed by the recording processing section,
wherein the output buffer stores the data stream supplied from the recording processing section after the selecting section has switched the types of recording processing.

7. The recorder of claim 6, further comprising a signal generating section for generating an identification signal showing whether the recording processing selected is the first type or the second type.

8. The recorder of claim 7, wherein identification information represented by the identification signal is written on the storage medium.

9. The recorder of claim 2, further comprising:
a setting section that receives an instruction on a recording mode to set; and
a controller, which sets a write rate according to the recording mode and controls the selecting operation of the selecting section based on a result of the comparison between the write rate that has been set and the transfer rate,
wherein if the transfer rate is higher than the write rate that has been set, the controller instructs the selecting section to select the first type of recording processing, and
wherein if the transfer rate is equal to or lower than the write rate that has been set, the controller instructs the selecting section to select the second type of recording processing.

10. The recorder of claim 9, further comprising a recognizing section for outputting recognition information showing whether the storage medium loaded is a first type of storage medium or a second type of storage medium, the first and second types being different from each other,
wherein the maximum write rate of the first type of storage medium is lower than that of the second type of recording medium, and
wherein if a recording mode with the highest quality is selected and if the recognition information shows that the storage medium loaded is the first type of storage medium, the controller sets a first write rate as the write rate, and
wherein if the recording mode with the highest quality is selected and if the recognition information shows that the storage medium loaded is the second type of storage medium, the controller sets a second write rate, which is higher than the first write rate, as the write rate.

11. A recording method comprising the steps of:
receiving a digital broadcasting wave and outputting a data stream;
receiving the data stream and detecting its transfer rate;
selecting either a first type of recording processing including a compression coding process or a second type of recording processing including no compression coding process according to the transfer rate;
receiving the data stream and performing the selected type of recording processing on the stream; and
writing the data stream that has been processed through the recording processing on a storage medium.

12. The method of claim 11, further comprising the step of recognizing the type of the storage medium loaded,
wherein the step of selecting includes selecting either the first or second type of recording processing according to the type of the storage medium recognized as well.

13. The method of claim 11, wherein the step of receiving includes receiving the digital broadcasting wave and outputting a plurality of data streams one after another, and
wherein the transfer rates of the data streams being output change when the data streams are switched, and
wherein the step of selecting includes switching one of the first and second types of recording processing into the other according to the transfer rate of the data stream newly switched.
